# EUROPÄISCHE PATENTSCHRIFT

(11) **EP 1 784 314 B1**
(45) Veröffentlichungstag und Bekanntmachung des Hinweises auf die Patenterteilung: **16.11.2011**
(21) Anmeldenummer: 05779467.9
(22) Anmeldetag: 01.08.2005
(51) Int. Cl.: B60N 2/22

(54) **GETRIEBEVORRICHTUNG INSBESONDERE FÜR EINEN SITZVERSTELLER EINES KRAFTFAHRZEUGS UND RASTVERSTELLER FÜR EINEN FAHRZEUGSITZ**
TRANSMISSION DEVICE, IN PARTICULAR FOR THE SEAT ADJUSTER OF A MOTOR VEHICLE, AND RATCHET-TYPE ADJUSTER FOR A VEHICLE SEAT
DISPOSITIF DE TRANSMISSION, NOTAMMENT POUR LE DISPOSITIF D'AJUSTEMENT DU SIEGE D'UN VEHICULE A MOTEUR, ET DISPOSITIF D'AJUSTEMENT A CRANS POUR UN SIEGE DE VEHICULE

(30) Priorität: 07.08.2004 DE 102004038457
(43) Veröffentlichungstag der Anmeldung: 16.05.2007
(73) Patentinhaber: Johnson Controls GmbH, 51399 Burscheid (DE)
(72) Erfinder: SCHÜLE, Robert, 71034 Böblingen (DE); SCHMODDE, Hans, 71034 Böblingen (DE); LOWINSKI, Clemens, 40721 Hilden (DE)
(74) Vertreter: Polypatent
(86) Internationale Anmeldenummer: PCT/EP2005/008308
(87) Internationale Veröffentlichungsnummer: WO 2006/015755

(56) Entgegenhaltungen:
- DE-A1- 3 001 164
- DE-C- 591 878
- US-A- 3 051 526
- US-A- 3 999 247

## Beschreibung

Die Erfindung betrifft eine Getriebevorrichtung, für einen Versteller eines Fahrzeugsitzes, zur Umwandlung einer linearen Antriebsbewegung in eine drehende Abtriebsbewegung, sowie einen damit ausgestatteten Rastversteller für einen Fahrzeugsitz.

### Stand der Technik

Eine gattungsgemäße Getriebeeinrichtung für die Neigungsverstellung der Rückenlehne eines Fahrzeugsitzes ist aus der Offenlegungsschrift DE 30 01 164 A1 bekannt. Sie besteht aus einem einfachen Hebelwerk, mittels dessen die Bewegung eines linear arbeitenden Kolbens eines Hydraulikzylinders in eine Drehbewegung umgewandelt wird. Das Abtriebsdrehmoment ist dabei im Wesentlichen über den gesamten Weg des Kolbens konstant.

Derartige Getriebeeinrichtungen erfordern einen erheblichen Bauraum und sind insbesondere dann weniger geeignet, wenn im Verlaufe der Drehbewegung unterschiedlich hohe Drehmomente und Drehgeschwindigkeiten gefordert werden. Beim Lösen von rastend wirkenden Arretiereinrichtungen, insbesondere Rastverstellern von Fahrzeugsitzen, ist jedoch in der Regel ein hohes Lösemoment erforderlich, durch welches die rastenden Bauteile durch Drehung außer unmittelbarem Eingriff gebracht werden. Eine hohe Verstellgeschwindigkeit ist hierbei nicht notwendig. Nachdem dies erfolgt ist, sollen die Bauteile zügig in ihre Freigabe-Endstellung gebracht werden, wozu ein hohes Verstellmoment nicht mehr erforderlich ist.

Eine Getriebevorrichtung für einen Fahrzeugsitz ist beispielsweise aus der US-PS 3,999,247 bekannt.

Ein Rastversteller für einen Fahrzeugsitz ist beispielsweise auch aus der US 3,051,526 A bekannt.

Ein Getriebe zur Umsetzung einer rotierenden Bewegung in eine reziproke Bewegung ist beispielsweise aus der DE 591 878 C bekannt.

### Aufgabe

Der Erfindung liegt die Aufgabe zugrunde, eine kompakt bauende Getriebeeinrichtung zur Umwandlung einer linearen Antriebsbewegung in eine drehende Abtriebsbewegung bereitzustellen. Vorzugsweise sollen dabei Abtriebsmoment und -geschwindigkeit im Verlaufe der Bewegung auf einfache Weise veränderbar sein.

### Lösung

Die Aufgabe wird erfindungsgemäß durch die Merkmale des Anspruchs 1 gelöst, Vorteilhafte Ausgestaltungen ergeben sich aus den Unteransprüchen.

Durch den Kontakt mit der sich linear bewegenden Schrägfläche wird das zugeordnete Hebelende seitlich verlagert. Hierdurch führt der auf der Abtriebsachse gelagerte Hebel eine Schwenkbewegung aus, infolge derer die abtreibende Welle eine Drehbewegung ausführt. Die Schrägfläche ist dabei so ausgebildet, dass ihre Oberfläche am Wirkort zwischen Hebelende und Schrägfläche gegenüber ihrer Verschieberichtung geneigt ist, und zwar um einen Winkel zwischen 0° und 90°. Die durch die Keilwirkung auf das Hebelende ausgeübte, zur Verschieberichtung der Schrägfläche orthogonale und durch die Drehlagerung des Hebels in Rotation umgewandelte Kraft ist dabei um so größer, je kleiner der Neigungswinkel gewählt wird. Naturgemäß wird in diesem Fall bei kleiner Drehgeschwindigkeit ein hohes Drehmoment an der antreibende Welle erzeugt. Ist der Neigungswinkel hingegen größer, werden das erreichbare Drehmoment kleiner und die Drehgeschwindigkeit größer.

Nach einer ersten bevorzugten Ausführungsform der Erfindung ist vorgesehen, dass die Wirkung zwischen Hebel und Schrägfläche gleitreibend erfolgt, insbesondere bei relativ geringen Wirkkräften. Hierdurch wird die Zahl der erforderlichen Bauteile besonders klein gehalten. Im Bereich des Wirkorts werden Hebel und/oder Schrägfläche vorzugsweise aus Werkstoffen mit geringen Reibkoeffizienten, beispielsweise Polyoxymethylen (POM) gefertigt.

Alternativ kann vorgesehen werden, dass zwischen Hebel und Schrägfläche Rollreibung herrscht. Zu diesem Zweck kann beispielsweise eine am Hebelende gelagerte Rolle in Kontakt mit der Schrägfläche gebracht werden. Diese Ausführung bietet sich insbesondere bei sehr hohen Wirkkräften oder großer Neigung der Schrägfläche mit einer entsprechend zügigen Drehbewegung der abtreibenden Achse an.

Mit Vorteil ist die Schrägfläche gegenüber einer gedachten, Wirkort und Abtriebsdrehachse verbindenden Geraden geneigt und wird in Richtung dieser gedachten Geraden oder hierzu parallel verschoben, wobei ein Hebel Verwendung finden kann, der sich genau in Richtung dieser gedachten Gerade erstreckt.

Für viele Anwendungen, so auch zum Lösen von Fahrzeugsitz-Rastverstellern, nimmt die Neigung der Schrägfläche am Wirkort mit abnehmender Entfernung der Schrägfläche von der Abtriebsachse zu. Bei gleichförmiger Linearbewegung der Schrägfläche in Richtung der Drehachse vergrößert sich dabei die Drehgeschwindigkeit der abtreibenden Welle.

Die Getriebeeinrichtung weist vorzugsweise eine Vielzahl jeweils mit einer gesonderten Schrägfläche in Wirkung stehende Hebel auf, wodurch das an der abtreibenden Welle erzeugbare Drehmoment in Abhängigkeit von der Zahl der Linearantriebe praktisch beliebig vergrößerbar ist. Ferner können sich bei einer entsprechenden Anordnung die durch die Wirkkräfte verursachten Lagerkräfte der abtreibenden Welle ausgleichen, so dass deren Lagerung vergleichsweise einfach ausgeführt werden kann.

Dieser Vorteile tritt beispielsweise dann auf, wenn zwei einander vorzugsweise diametral angeordnete Hebel vorgesehen werden. Die Getriebevorrichtung kann hierdurch ferner ein besonders schlankes Gehäuse erhalten.

Nach einer besonderen Ausbildung der Erfindung sind die Schrägflächen Teil einer in Richtung der Abtriebsdrehachse sowie entgegengerichtet bewegbaren Kulissenführung, so dass sowohl die Linearbewegung der Schrägfläche zur Drehachse hin als auch die entgegengesetzte Linearbewegung zur Erzeugung eines wechselnden Drehmoments nutzbar ist.

Mit Vorteil sind derart ausgebildete Getriebevorrichtungen in Rastverstellern für Fahrzeugsitz verwendbar, insbesondere für die Neigungsverstellung der Rückenlehne, wobei der Abtrieb der Getriebeeinrichtung auf Rastklinke und/oder Sperrnocken des Rastverstellers wirkt. Zum Entriegeln der Rastklinke und/oder des die Rastklinke in Haltestellung sichernden Sperrnockens sind üblicherweise hohe Lösekräfte erforderlich. Ist der direkte Kontakt der Rastzähne hingegen einmal aufgehoben, sind Rastklinke und/oder Sperrnocken mit geringem Kraftaufwand, aber zügig, in die Entriegelungs-Endposition zu verlagern.

### Figuren

Die Figuren stellen beispielhaft und schematisch verschiedene Ausführungen der Erfindung dar.

Es zeigen:

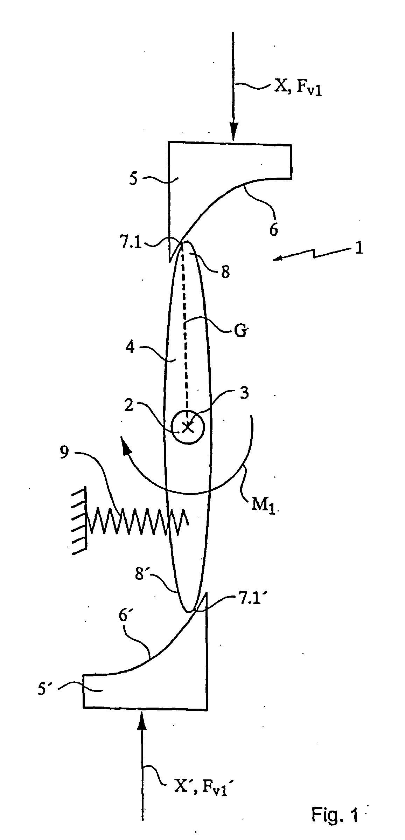

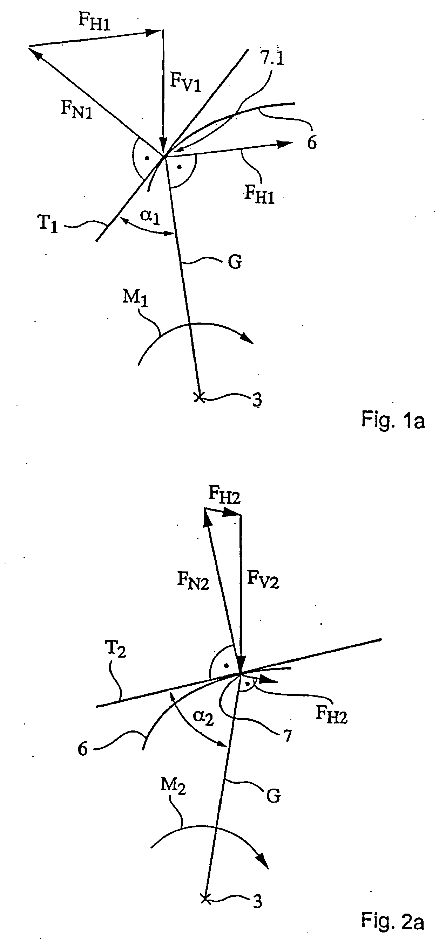

- Fig. 1: eine Vorrichtung nach einer ersten Ausführung der Erfindung in einer ersten Drehstellung,
- Fig. 1 a: eine Bilanz der in Stellung nach Fig. 1 wirkenden Kräfte,
- Fig. 2: die Vorrichtung nach Fig. 2 in einer zweiten Drehstellung,
- Fig. 2a: die Kräftebilanz am Wirkort in der zweiten Drehstellung,
- Fig. 3: eine andere erfindungsgemäße Getriebevorrichtung,
- Fig. 4: eine Getriebevorrichtung nach einer weiteren Ausführung der Erfindung,
- Fig. 4a, b: vergrößerte Darstellungen der Vorrichtung nach Fig. 4,
- Fig. 5: eine andere erfindungsgemäße Getriebevorrichtung,
- Fig. 6: einen erfindungsgemäß ausgestatteten Rastversteller für einen Fahrzeugsitz.

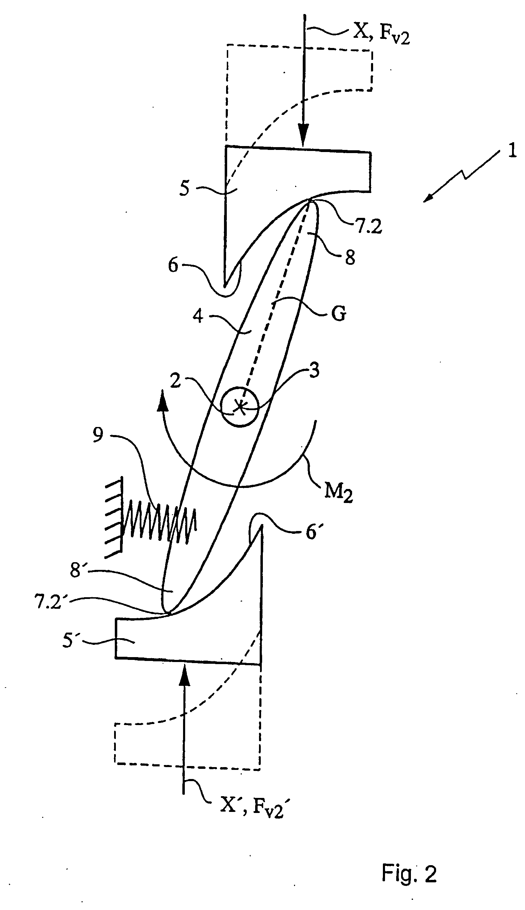

Die in den Figuren 1 und 2 gezeigte Getriebevorrichtung 1 besteht aus einer Abtriebswelle 2, welche um eine Drehachse 3 rotieren kann. Drehfest mit der Abtriebswelle 2 verbunden sind zwei diametral angeordnete, gerade Hebel 4, 4', welche sich radial von der Abtriebswelle 2 erstrecken.

Die Getriebevorrichtung 1 weist ferner zwei einander in Bezug auf die Drehachse 3 gegenüberliegende Verschiebeelemente 5, 5' auf, deren der Drehachse 3 zugewandte Seiten bogenförmige Schrägflächen 6, 6' ausbilden. Jede Schrägfläche 6, 6' steht an einem Wirkort 7.1, 7.1 mit einem radial äußeren Ende 8, 8' eines Hebels 4, 4' in Wirkung. Wie aus Fig. 1 a ersichtlich, wird dabei auf das Ende 8 des Hebels 4 (und ebenso am gegenüberliegenden Ende 8') durch die von der Schrägfläche 6 in Verschieberichtung ausgeübten Kraft FV eine Normalkraft FN1 und infolge dessen eine Kraft FH1 herbeigeführt, die orthogonal zu einer Wirkort 7.1 und Drehachse 3 verbindenden Geraden G ausgerichtet ist und in Verbindung mit dem Hebel 4 das Drehmoment M1 erzeugt. Die Größe der Kraft FH1 hängt dabei von der Neigung α1 der durch den Wirkort 7.1 verlaufenden Tangente T1 ab. In der Drehstellung nach Fig. 1 und 1a ist die Neigung α1 der Tangente T1 relativ gering, so dass bei einer vorgegebenen Verschiebekraft F1 eine hohe Kraft FH1 und somit auch ein großes Drehmoment M1 an der Abtriebswelle 2 erzeugt werden. Die Drehgeschwindigkeit ist dabei naturgemäß gering.

Bei einer linearen Verlagerung der Verschiebeelemente 5, 5' in Richtung der Drehachse 3 wandert der Wirkort 7.2,7.2' lauf den Schrägflächen 6, 6`, wie in Fig. 2 dargestellt. Die Richtungen X, X' der Verlagerungen müssen dabei nicht zwingend durch die Drehachse 3 hindurchführen, sondern können unter anderem auch, wie im Ausführungsbeispiel, zueinander parallel an der Drehachse vorbeilaufen.

Die bogenförmige Kontur der Schrägflächen 6, 6' ist so ausgelegt, dass die Neigung α während der Verlagerung des Wirkorts 7.2, 7.2' zunimmt und bei der Stellung nach Fig. 2 und 2a den gegenüber α1 höheren Wert α2 annimmt. Bei konstanter Verschiebekraft FV nehmen infolge dessen die Normalkraft FN2 und die auf das Ende 8 des Hebels 4 wirkende Kraft FH2 ab. Ebenso wird das Drehmoment M2 geringer, die Drehgeschwindigkeit nimmt hingegen zu.

Die Getriebevorrichtung erzeugt somit bei konstanter Verschiebekraft Fᵥ und gleichbleibender Verschiebegeschwindigkeit der Verschiebeelemente 5, 5 um die Drehachse 3 eine Drehbewegung mit stetig sinkendem Drehmoment M und zunehmender Drehgeschwindigkeit. Das anfangs hohe Drehmoment M1 kann dabei zur Überwindung von Losbrechmomenten genutzt werden, die nachfolgend anwachsende Drehgeschwindigkeit zum zügigen Verstellen.

Die Zurückstellung des Hebels 4 in seine Ausgangsposition wird bei sich nunmehr auseinander bewegenden Verschiebelementen 5, 5' durch eine Rückstellfeder 9 bewirkt, welche bei der vorherigen Drehbewegung vorgespannt wurde.

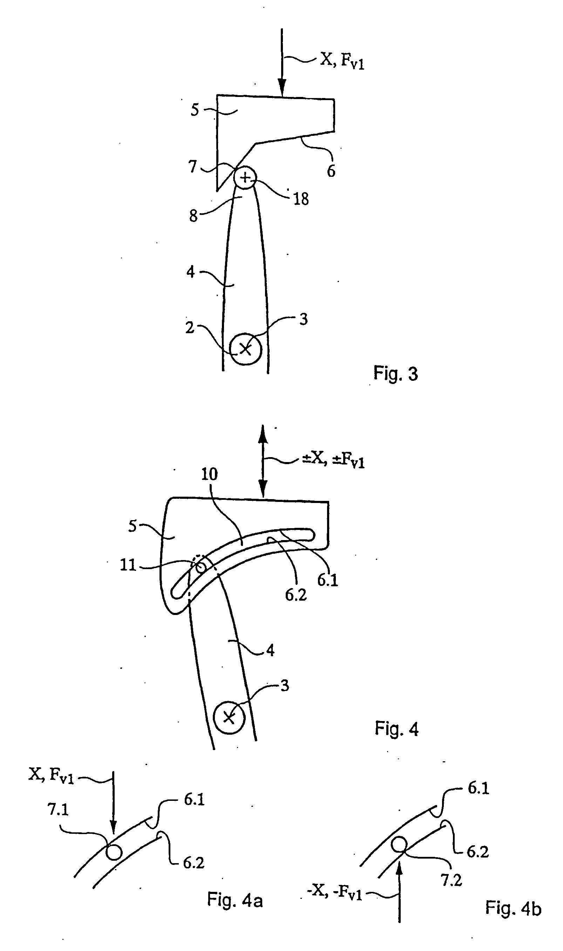

Falls bei bestimmten Positionen der Getriebevorrichtung 1 sprunghafte Veränderungen von Drehmoment M und Drehgeschwindigkeit gewünscht werden, kann die Schrägfläche 6 auch polygonartig ausgebildet werden, wie in Fig. 3 dargestellt. Ein am Ende 8 des Hebels 4 angeordneter Wälzkörper 18 reduziert dabei die Reibkräfte am Wirkort 7.

Bei der Ausbildung nach Fig. 4 ist der Verschiebekörper 5 mit einer bogenförmigen Kulisse 10 mit einer oberen Schrägfläche 6.1 und einer hierzu äquidistanten unteren Schrägfläche 6.2 ausgestattet. In der Kulisse 10 läuft ein endseitig aus dem Hebel 4 auskragender Bolzen 11, der sich bei Verlagerung des Verschiebeelements 5 in Richtung der Drehachse 3 am Wirkort 7.1 an der oberen Schrägfläche 6.1, bei entgegengesetzter Verschiebung jedoch am Wirkort 7.2 an der unteren Schrägfläche 6.2 abstützt (siehe Fig. 4a, 4b). Somit kann ohne Verwendung einer Rückstellfeder 9 eine in beiden Drehrichtungen wirkende Getriebevorrichtung geschaffen werden.

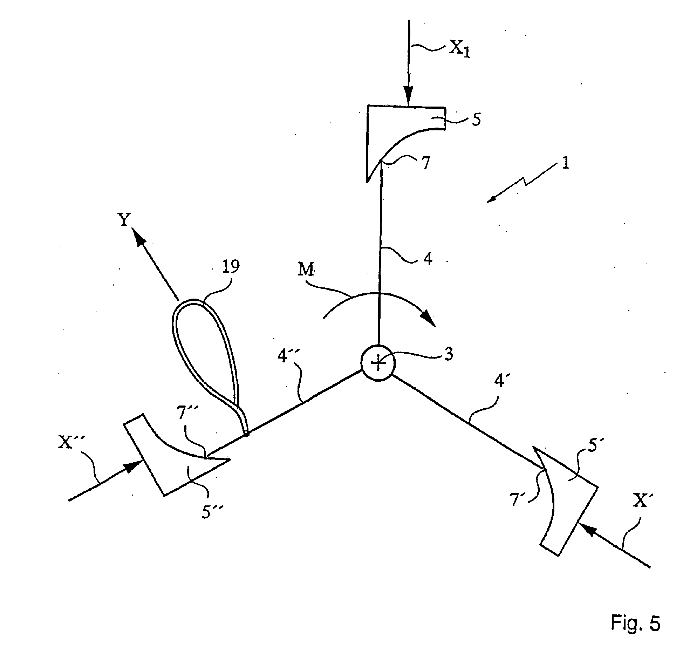

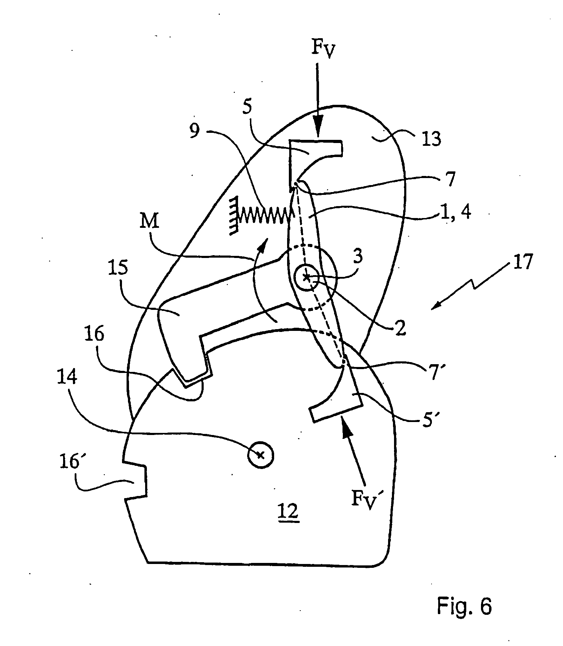

Fig. 5 zeigt eine Getriebevorrichtung 1, die drei miteinander starr verbundene, um die Drehachse 3 gemeinsam drehbare Hebel 4, 4' und 4" mit jeweils einem zugeordneten Verschiebeelement 5, 5' und 5" aufweist. Selbstverständlich kann die Getriebevorrichtung 1 eine Vielzahl weiterer Ausbildungen aufweisen, bei denen die Hebel 4 beispielsweise zueinander asymmetrisch oder in anderer Zahl angeordnet sind. Ferner ist es möglich, aus Sicherheitsgründen beispielsweise das Verschiebeelement 5" manuell betätigbar zu gestalten, so dass bei einem Ausfall elektrisch angetriebener Verschiebeelemente 5 und 5' eine Notbetätigung in Richtung des Moments M erfolgen kann. Die gleiche Wirkung erzielt eine unmittelbar an einem der Hebel 4 bis 4" angreifende Handhabe (Griffschlaufe 19, Zug in Richtung Y). Eine mögliche Verwendung der erfindungsgemäßen Getriebevorrichtung 1 ist in Fig. 6 dargestellt, bei welcher das erzeugte Drehmoment M zum Lösen eines Rastverstellers 17 für einen Fahrzeugsitz eingesetzt wird. Der Rastversteller 17 besteht aus einem ersten, mit dem Sitzteil fest verbundenen Beschlagteil 12 und einem zweiten, an der Rückenlehne angeordneten Beschlagteil 13. Das erste Beschlagteil 12 und das zweite Beschlagteil 13 sind um eine Achse 14, die gleichzeitig die Schwenkachse von Sitzteil und Rückenlehne darstellt, zueinander drehbeweglich. Eine am zweiten Beschlagteil 13 im Bereich der Achse 3 drehbar angeordnete Rastklinke 15 kann wahlweise in eine der im Außenumfang des ersten Beschlagteils 12 eingelassenen Ausnehmungen 16, 16' eingreifen und damit die Winkelstellung der Rückenlehne einstellbar fixieren. Die Rastklinke 15 ist drehfest auf der Abtriebswelle 2 der Getriebevorrichtung 1 befestigt und kann von dieser zuerst mit hoher Lösekraft, nachfolgend mit hoher Lösegeschwindigkeit aus den Ausnehmungen 16, 16' ausgehoben werden.

### Bezugszeichen

- 1: Getriebevorrichtung
- 2: Abtriebswelle
- 3: Drehachse
- 4: Hebel
- 5: Verschiebeelement
- 6: Schrägfläche
- 7: Wirkort
- 8: Ende (des Hebels 4)
- 9: Rückstellfeder
- 10: Kulisse
- 11: Bolzen
- 12: Beschlagteil (sitzteilseitig)
- 13: Beschlagteil (rückenlehnenseitig)
- 14: Achse
- 15: Rastklinke
- 16: Ausnehmung
- 17: Rastversteller
- 18: Wälzkörper
- 19: Griffschlaufe

## Patentansprüche

1. Getriebevorrichtung (1) für einen Versteller eines Fahrzeugsitzes, zur Umwandlung einer linearen Antriebsbewegung in eine drehende Abtriebsbewegung, **gekennzeichnet durch** mindestens einen mit der Abtriebsachse verbundenen, sich gegenüber dieser radial erstreckenden Hebel (4, 4'), dessen freies Ende mit einer linear in Richtung der Abtriebsachse bewegbaren Schrägfläche (6, 6') des Verschiebeelements (5, 5') in Wirkung steht, wobei die Schrägfläche (6, 6') bogen- oder polygonförmig ausgebildet ist.

2. Getriebevorrichtung (1) nach Anspruch 1, **dadurch gekennzeichnet, dass** die Schrägfläche (6, 6') gegenüber einer gedachten, den jeweiligen Wirkort (7) und die Abtriebsdrehachse verbindenden Geraden G um einen Winkel α mit 0°<α<90° geneigt ist.

3. Getriebevorrichtung (1) nach Anspruch 1 oder 2, **dadurch gekennzeichnet, dass** die Wirkung zwischen Hebel (4, 4') und Schrägfläche (6, 6') gleitreibend erfolgt.

4. Getriebevorrichtung (1) nach Anspruch 1 oder 2, **dadurch gekennzeichnet, dass** die Wirkung zwischen Hebel (4, 4') und Schrägfläche (6, 6') rollreibend erfolgt.

5. Getriebevorrichtung (1) nach Anspruch 1, **dadurch gekennzeichnet, dass** die Neigung α der Schrägfläche (6, 6') am Wirkort mit abnehmender Entfernung der Schrägfläche (6, 6') von der Abtriebsachse zunimmt.

6. Getriebevorrichtung (1) nach einem der vorhergehenden Ansprüche, **gekennzeichnet durch** eine Vielzahl jeweils mit einer gesonderten Schrägfläche (6, 6') in Wirkung stehende Hebel (4, 4').

7. Getriebevorrichtung (1) nach Anspruch 6, **gekennzeichnet durch** zwei einander vorzugsweise diametral gegenüberstehende Hebel (4, 4').

8. Getriebevorrichtung (1) nach einem der vorhergehenden Ansprüche, **dadurch gekennzeichnet, dass** die Schrägflächen (6, 6') Teil einer in Richtung der Abtriebsdrehachse sowie entgegengerichtet bewegbaren Kulissenführung sind.

9. Rastversteller für Fahrzeugsitz, insbesondere für die Neigungsverstellung der Rückenlehne, mit einer auf Rastklinke und/oder Sperrnocken wirkenden Getriebevorrichtung (1) nach einem der vorhergehenden Ansprüche.

## Claims

1. Transmission device (1) for an adjuster of a vehicle seat, for converting a linear driving movement into a rotating output movement, **characterised by** at least one lever (4, 4') which is connected to the output spindle and extends radially in relation to the latter and the free end of which is in active connection with an inclined face (6, 6') on the sliding element (5, 5'), which face can be moved linearly in the direction of the output spindle, said inclined face (6, 6') being of arcuate or polygonal construction.

2. Transmission device (1) according to claim 1, **characterised in that** the inclined face (6, 6') is inclined, by an angle α in which 0°<α<90°, in relation to an imaginary straight line G connecting the particular site of action (7) and the output axis of rotation.

3. Transmission device (1) according to claim 1 or 2, **characterised in that** the action between the lever (4, 4') and the inclined face (6, 6') takes place with sliding friction.

4. Transmission device (1) according to claim 1 or 2, **characterised in that** the action between the lever (4, 4') and the inclined face (6, 6') takes place with rolling friction.

5. Transmission device (1) according to claim 1, **characterised in that** the inclination α of the inclined face (6, 6') at the point of action increases as the distance of said inclined face (6, 6') from the output spindle decreases.

6. Transmission device (1) according to one of the preceding claims, **characterised by** a plurality of levers (4, 4') which each operate with a separate inclined face (6, 6').

7. Transmission device (1) according to claim 6, **characterised by** two levers (4, 4') which are preferably diametrically opposite one another.

8. Transmission device (1) according to one of the preceding claims, **characterised in that** the inclined faces (6, 6') are part of a gate-type guide which can be moved in the direction of the output axis of rotation and also in the opposite direction.

9. Latching adjuster for a vehicle seat, particularly for adjusting the inclination of the backrest, having a transmission device (1) according to one of the preceding claims which acts on a latching pawl and/or locking cam.

## Revendications

1. Système d'engrenage (1) pour un dispositif de réglage d'un siège de véhicule automobile, destiné à transformer un mouvement d'entraînement linéaire en un mouvement de sortie rotatif, **caractérisé par** au moins un levier (4, 4'), qui est relié à l'axe récepteur et s'étend radialement par rapport à celui-ci et dont l'extrémité libre coopère avec une surface oblique (6, 6'), mobile linéairement dans la direction de l'axe récepteur, de l'élément de translation (5, 5'), la surface oblique (6, 6') ayant une forme courbe ou polygonale.

2. Système d'engrenage (1) selon la revendication 1, **caractérisé en ce que** la surface oblique (6, 6') est inclinée par rapport à une droite G imaginaire, reliant le point d'action (7) respectif et l'axe de rotation récepteur, en formant un angle α avec 0°<α<90°.

3. Système d'engrenage (1) selon la revendication 1 ou 2, **caractérisé en ce qu'**entre le levier (4, 4') et la surface oblique (6, 6') s'exerce une action de friction par glissement.

4. Système d'engrenage (1) selon la revendication 1 ou 2, **caractérisé en ce qu'**entre le levier (4, 4') et la surface oblique (6, 6') s'exerce une action de friction par rotation.

5. Système d'engrenage (1) selon la revendication 1, **caractérisé en ce que** l'inclinaison α de la surface oblique (6, 6') augmente au niveau du point d'action lorsque la distance diminue entre surface oblique (6, 6') et l'axe récepteur.

6. Système d'engrenage (1) selon l'une quelconque des revendications précédentes, **caractérisé par** une pluralité de leviers (4, 4') coopérant chacun avec une surface oblique (6, 6') séparée.

7. Système d'engrenage (1) selon la revendication 6, **caractérisé par** deux leviers (4, 4') de préférence diamétralement opposés.

8. Système d'engrenage (1) selon l'une quelconque des revendications précédentes, **caractérisé en ce que** les surfaces obliques (6, 6') font partie d'une coulisse de guidage mobile dans la direction de l'axe de rotation récepteur et dans la direction opposée.

9. Dispositif de réglage avec blocage pour un siège de véhicule automobile, en particulier pour le réglage de l'inclinaison du dossier, comportant un système d'engrenage (1) selon l'une quelconque des revendications précédentes agissant sur un cliquet de blocage et/ou un ergot de blocage.
